# EUROPÄISCHE PATENTSCHRIFT

(11) **EP 1 984 533 B1**
(45) Veröffentlichungstag und Bekanntmachung des Hinweises auf die Patenterteilung: **20.07.2011**
(21) Anmeldenummer: 07702397.6
(22) Anmeldetag: 31.01.2007
(51) Int. Cl.: C22C 38/00, C22C 38/18, H01M 8/02

(54) **KRIECHFESTER FERRITISCHER STAHL**
CREEP-RESISTANT FERRITIC STEEL
ACIER FERRITIQUE RESISTANT AU FLUAGE

(30) Priorität: 18.02.2006 DE 102006007598
(43) Veröffentlichungstag der Anmeldung: 29.10.2008
(73) Patentinhaber: Forschungszentrum Jülich GmbH, 52425 Jülich (DE)
(72) Erfinder: QUADAKKERS, Willem, J., 6363 EG Wijnandsrade (NL); NIEWOLAK, Leszek, 52428 Jülich (DE); ENNIS, Philip, James, 41844 Wegberg (DE)
(86) Internationale Anmeldenummer: PCT/DE2007/000166
(87) Internationale Veröffentlichungsnummer: WO 2007/093148

(56) Entgegenhaltungen:
- EP-A1- 1 536 031
- WO-A-01/91215
- WO-A-2006/138070
- US-A- 4 640 722
- JOHN N. JOHNSON: "Influence of Columbium on the 870°C creep properties of 18% chromium ferritic stainless steels" SAE TECHNICAL PAPERS SERIES, Nr. 810035, 1981, Seiten 1-13, XP009083580
- AUTORENKOLLEKTIV: "Spurenelemente in Stahlen" 1985, VERLAG STAHLEISEN MBH , DÜSSELDORF , XP002433212 Seite 19 - Seite 22
- YANG Z ET AL: "Selection and Evaluation of Heat Resistant Alloys for SOFC Interconnect Applications" JOURNAL OF THE ELECTROCHEMICAL SOCIETY, ELECTROCHEMICAL SOCIETY. MANCHESTER, NEW HAMPSHIRE, US, Bd. 150, Nr. 9, September 2003 (2003-09), Seiten 1188-1201, XP002403195 ISSN: 0013-4651

## Beschreibung

Die Erfindung bezieht sich auf einen kriechfesten ferritischen Stahl für hochtemperaturbelastete Bauteile insbesondere für den Einsatz in Hochtemperaturbrennstoffzellen.

### Stand der Technik

Eine Hochtemperaturbrennstoffzelle (Solid Oxide Fuel Cell, SOFC) wandelt chemische Energie eines Brennstoffs, wie etwa Wasserstoff, Methan oder Kohlenmonoxid, mit Hilfe eines Oxidationsmittels, wie Sauerstoff oder Luft, direkt in elektrische Energie um. Der Brennstoff ist vom Oxidationsmittel durch einen Feststoffelektrolyten, wie etwa Yttrium-stabilsiertes Zirkoniumoxid, getrennt. Bei einer Betriebstemperatur der Zelle zwischen 600 und 1000 °C leitet der Feststoffelektrolyt Sauerstoffionen von der Sauerstoffseite (Kathodenraum) auf die Brennstoffseite (Anodenraum), wo sie mit dem Brennstoff reagieren. Dabei werden Elektronen frei, die einen externen Verbraucher speisen können.

Der Feststoffelektrolyt ist mit porösen, katalytisch wirkenden Elektrodenmaterialien beschichtet. Im Allgemeinen besteht die Anode auf der Brennstoffseite aus einem Cermet aus metallischem Nickel und Yttrium-stabilisiertem Zirkoniumoxid. Die Kathode auf der Sauerstoffseite besteht in der Regel aus einem Perowskit auf Lanthan-Basis.

Da eine einzelne Brennstoffzelle nur eine geringe Spannung in der Größenordnung 1 Volt abgibt, müssen für die meisten technischen Anwendungen mehrere Brennstoffzellen zusammengeschaltet werden. Üblicherweise werden hierzu mehrere Zellen zu einem so genannten Stack gestapelt. Hierbei ist jeweils zwischen zwei Zellen noch eine bipolare Platte nötig, die auch Interkonnektor genannt wird. Die bipolare Platte leitet den Strom von der einen Zelle in die Nachbarzelle und trennt gleichzeitig den Kathodenraum der einen Zelle gasdicht vom Anodenraum der anderen Zelle. Bei den meisten heute diskutierten SOFC-Flachzellen-Konzepten übernimmt die bipolare Platte zudem noch die Funktion der Gasverteilung in den Zellen und gibt den Zellen ihre mechanische Stabilität (EP 0338 823 A1). Daher ist die bipolare Platte im Gegensatz zum Elektrolyten und zu den Elektroden, die größenordnungsmäßig 100 µm dick sind, in der Regel einige Millimeter dick. In neueren SOFC-Konzepten, insbesondere für mobile Anwendungen in Fahr- oder Flugzeugen, sind die bipolaren Platten aus Gründen der Gewichtsersparnis jedoch schon wesentlich dünner (0,3-1 mm) ausgestaltet.

Die Anforderungen an eine bipolare Platte sind vielfältig. Sie muss bei hohen Temperaturen unter Beaufschlagung mit Brennstoff auf der einen Seite und mit Sauerstoff auf der anderen Seite eine hohe Oxidationsbeständigkeit aufweisen. Zudem ist sie mit den übrigen Komponenten der Zelle, die zum Teil aus Keramiken bestehen, mechanisch fest verbunden. Damit sich bei Temperaturwechseln keine mechanischen Spannungen bilden, die die übrigen Komponenten zerstören können, muss die bipolare Platte einen an die übrigen Komponenten angepassten thermischen Ausdehnungskoeffizienten (etwa 10-12* 10⁻⁶ K⁻¹) aufweisen. Der jeweils erforderliche exakte Wert des Ausdehnungskoeffizienten hängt dabei vom jeweiligen Zellenkonzept ab. Bei anodensubstratgestützten Zellen sind im Allgemeinen etwas höhere Ausdehnungskoeffizienten erforderlich als bei Zellenkonzepten, die auf einem Elektrolyt-Folienkonzept beruhen.

Ferritische Chromstähle können dieses Anforderungsprofil im Prinzip erfüllen. Diese Werkstoffe bilden an ihrer Oberfläche eine Oxidschicht auf Cr₂O₃-Basis, die das Innere des Materials vor Korrosion schützt. Diese Schichten sind jedoch bei den hohen Betriebstemperaturen von Hochtemperaturbrennstoffzellen in der Regel instabil. Sie platzen ab, wobei die Bruchstücke die Gaskanäle der bipolaren Platte verstopfen und den Gasfluss behindern können. Außerdem werden sie mit der Zeit durch weitere Korrosion dicker, was ihre elektrische Leitfähigkeit und damit die Leistungsausbeute des Brennstoffzellenstapels zunehmend verringert. Bei einem hohen Sauerstoffangebot, wie es im Kathodenraum vorliegt, werden zudem flüchtige Chromoxide oder Chromhydroxide gebildet, die auf die Kathode oder auf die Grenzfläche zwischen der Kathode und dem Elektrolyten als Katalysatorgift wirken und die Zellenleistung somit weiter dauerhaft herabsetzen.

Um die Chromoxidschichten zu stabilisieren, offenbart DE 44 10 711 C1 eine bipolare Platte aus einer Chromoxid bildenden Legierung, die im Bereich der Gasleitflächen mit einer Schutzschicht aus Aluminium versehen ist. Die Aluminiumschicht bildet bei Betriebstemperatur an ihrer Oberfläche eine Al₂O₃-Schicht aus, die die Chromoxidschicht vor Korrosion schützt. Die nachteilige Verringerung der elektrischen Leitfähigkeit durch Chromoxidschichten im Bereich der Kontaktflächen zwischen Elektroden und bipolarer Platte muss jedoch bei dieser bipolaren Platte unverändert hingenommen werden.

Ferner ist aus EP 04 10 166 A1 ein Bauteil zur Stromführung für Hochtemperaturbrennstoffzellen bekannt. Dieses weist eine nichtoxidierbare metallische Hülle aus Gold, Palladium oder Platin auf, die eine hohe elektrische Leitfähigkeit aufweist und kein Material durch Abdampfen verliert. Jedoch ist eine solche Komponente in der Herstellung sehr teuer, und ihre Stabilität im Langzeitbetrieb ist nicht gewährleistet.

In DE 44 22 624 A1 wird ein Verfahren zum Schutz von chromhaltigen Körpern beschrieben, bei dem eine Schutzschicht aus einem oxidischen Chromat aufgebracht wird. Ein Nachteil dieser Beschichtungsverfahren ist jedoch, dass sie die bipolaren Platten deutlich verteuern. Außerdem besitzen die Schichten bei mechanischer Beschädigung während des Betriebs keine Ausheilfähigkeit.

In DE 100 25 108 A1 wurden neue Zusammensetzungen für ferritische Interkonnektorwerkstoffe offenbart. Durch die spezielle Kombination von Legierungselementen konnte erreicht werden, dass bei üblichen Betriebstemperaturen auf den Stahloberflächen Oxidschichten gebildet werden, die eine geringe Wachstumsrate, eine exzellente Haftung zum Metallsubstrat, eine hohe elektrische Leitfähigkeit sowie eine geringe Chromabdampfung aufweisen. Um diese Kombination günstiger Eigenschaften zu erzielen, wurde beispielsweise die maximale Konzentration der Legierungselemente Aluminium und Silizium auf sehr geringe Werte begrenzt. Da diese Elemente bei der konventionellen Stahlherstellung häufig als Desoxidationsmittel zugesetzt werden, können die günstigen Stahleigenschaften meistens nur durch den Einsatz neuer, aufwändiger und somit teurer Herstellungsverfahren erreicht werden.

Insbesondere bei Stackkonzepten, die nur geringere Interkonnektordicken (etwa 0,3-1 mm), hohe Betriebstemperaturen (etwa oberhalb 800 °C) und häufige Temperaturwechsel (etwa einige hundert oder sogar einige tausend Temperaturwechsel während der Betriebszeit der Zelle) vorsehen, macht sich eine spezielle Eigenschaft von ferritischen Stählen ungünstig bemerkbar. Diese Stähle besitzen bei hohen Temperaturen nur eine geringe Kriechbeständigkeit. Unter mechanischer Spannung, beispielsweise hervorgerufen durch Oxidation, neigen sie daher zu dauerhafter plastischer Verformung. Dadurch kann der gasdichte. Abschluss zwischen zwei Brennstoffzellen, den die bipolare Platte bewirkt, aufbrechen und der Brennstoffzellenstapel komplett ausfallen.

Zur Erhöhung der Kriechbeständigkeit werden üblicherweise Übergangsmetalle, Refraktärmetalle oder Leichtmetalle zulegiert. Nachteilig bewirken Übergangsmetalle häufig eine Austenitisierung des Werkstoffs, was den Ausdehnungskoeffizienten erhöht und die Oxidationsbeständigkeit verschlechtert. Refraktärmetalle reduzieren regelmäßig zusätzlich die Duktilität des Werkstoffs. Leichtmetalle verschlechtern in der Regel, auch wenn Sie nur in sehr geringen Konzentrationen von 0,1 - 0,4 % Massenprozent vorliegen, die schützenden Eigenschaften und die elektrische Leitfähigkeit der oxidischen Deckschichten auf Cr-Basis. Auf diese Weise kriechfest gemachte Stähle sind daher als Konstruktionswerkstoff für den Interkonnektor einer Hochtemperaturbrennstoffzelle nicht geeignet.

Aus der EP 1 536 031 A1 ist ein ferritischer Chromstahl bekannt, der etwa 20 Massenprozent Chrom enthält. Bei Kriechbeanspruchung bildet dieser Stahl im Temperaturbereich zwischen 700 und 900°C eine intermetallische Verbindung von Nb und Mo mit Fe, Cr und Si, welche sich an den Korngrenzen der ferritischen Matrix bildet und die Oxidationsbeständigkeit des Stahls deutlich erhöht. Dieser Stahl findet Verwendung in Brennstoffzellen.

### Aufgabe und Lösung

Aufgabe der Erfindung ist daher, einen ferritischen Stahl zur Verfügung zu stellen, der als Konstruktionswerkstoff für den Interkonnektor einer Hochtemperaturbrennstoffzelle geeignet ist und bei Temperaturen oberhalb 600 °C eine bessere Kriechfestigkeit aufweist als die hierfür nach dem Stand der Technik verwendeten Stähle.

Eine weitere Aufgabe der Erfindung ist es, eine auch bei häufigen Temperaturwechseln dauerhaft gasdichte bipolare Platte aus oben genanntem ferritischen Stahl sowie einen Brennstoffzellenstapel mit verbesserter Lebensdauer bei hohen Temperaturen und häufigen Temperaturwechseln zur Verfügung zu stellen.

Diese Aufgaben werden erfindungsgemäß gelöst durch einen Stahl gemäß Anspruch 1 sowie durch die Verwendung des Stahls in einer bipolaren Platte und in einem Brennstoffzellenstapel gemäß der Ansprüche 14 und 15. Weitere vorteilhafte Ausgestaltungen des Stahls ergeben sich aus den Unteransprüchen 2-13.

### Gegenstand der Erfindung

Der ferritische Chromstahl bildet bei Temperaturen zwischen 600 und 1000 °C an seiner Oberfläche eine Oxidschicht auf Cr₂O₃-Basis, die das Innere des Stahls vor Korrosion schützt. Er vermag in diesem Temperaturbereich Ausscheidungen einer intermetallischen Phase vom Typ Fe₂(M,Si) oder Fe₇(M,Si)6 mit wenigstens einem metallischen Legierungselement M auszubilden. Diese intermetallische Phase kann sich schon bei der Herstellung des Stahls bilden. Sie kann sich aber auch nach einer späteren Wärmebehandlung oder beim späteren Einsatz des Stahls bei Temperaturen zwischen 600 und 1000 °C bilden. Als Legierungselement M ist im Prinzip jedes Metall geeignet, das zusammen mit Eisen die intermetallische Phase vom Typ Fe₂M oder Fe₇M₆ bildet. Erfindungsgemäß ist M entweder Wolfram oder eine Kombination aus Wolfram und weiteren Legierungselementen des ferritischen Stahls, insbesondere Niob, Molybdän oder Tantal. Auch die Verwendung einer Kombination aus mehreren Metallen M ist möglich.

Es wurde erkannt, dass das Zulegieren derartiger Metalle an sich nach dem Stand der Technik den Stahl über zwei voneinander unabhängige physikalische Wirkungsmechanismen für den Einsatz in einer Hochtemperaturbrennstoffzelle unbrauchbar macht. Zum Einen weisen Ausscheidungen vom Typ Fe₂M oder Fe₇M₆ eine sehr mangelhafte Oxidationsresistenz auf. Hierdurch bilden sich bei hohen Temperaturen lokal schnell wachsende Oxide. Zum Anderen wird das in der Legierungsmatrix vorhandene Element M in die Cr-Oxidschicht eingebaut und dadurch dessen Wachstumsrate stark erhöht.

Erfindungsgemäß ist nun das Metall M in der intermetallischen Phase teilweise durch Silizium substituiert. Die intermetallische Phase hat dann eine allgemeine chemische Formel vom Typ Fe₂(M,Si) oder vom Typ Fe₇(M,Si)₆. Es wurde überraschend erkannt, dass hierdurch die Oxidationsbeständigkeit der genannten intermetallischen Phasen bei hohen Temperaturen wesentlich erhöht wird, insbesondere im Kontakt mit den Betriebsatmosphären von Hochtemperaturbrennstoffzellen. Zugleich wird der nachteilige Einbau des Metalls M in die Cr-Oxidschicht unterdrückt.

Es wurde außerdem erkannt, dass das Silizium seine aus dem Stand der Technik bekannte nachteilige Wirkung als leichtmetallisches Legierungselement bei der Substitution des Metalls M regelmäßig nicht entfaltet, da das Silizium in der intermetallischen Phase gelöst ist. Die nachteilige Wirkung nach dem Stand der Technik wurde dadurch verursacht, dass das Silizium bei hohen Temperaturen intern oxidierte.

Unter interner Oxidation wird verstanden, dass sich Oxidausscheidungen innerhalb der Legierung unterhalb der oxidischen, externen Deckschicht auf der Legierungsoberfläche bilden.

Als Folge der internen Oxidation entstanden durch Volumenzunahme metallische Einschlüsse in der Chromoxid-Deckschicht, und es wurden teilweise durchgehende Si-Oxidschichten unterhalb des Chromoxids gebildet. Diese nachteiligen Wirkungen des Siliziums sind bei der erfindungsgemäßen Substitution des Metalls M durch Silizium solange unterdrückt, wie nur maximal soviel Silizium zugesetzt wird, dass es sich noch vollständig in der intermetallischen Phase lösen kann. Welches Mengenverhältnis zwischen Silizium und Metall M hierfür maximal sinnvoll ist, hängt sowohl von der Wahl des Metalls M als auch von der Zusammensetzung des Grundwerkstoffs ab. Es kann für den konkreten Anwendungsfall durch den Fachmann in einer zumutbaren Anzahl Versuche ermittelt werden.

Durch die erfindungsgemäße Substitution des Metalls M durch Silizium wird es möglich, bei Anwendungen in Hochtemperaturbrennstoffzellen im Interesse einer höheren Kriechbeständigkeit mehr Ausscheidungen der intermetallischen Phase Fe₂(M,Si) oder Fe₇(M,Si)₆ in die ferritische Legierungsmatrix einzubringen als dies nach dem Stand der Technik mit Fe₂M oder Fe₇M₆ möglich war. Diese Ausscheidungen erhöhen signifikant die Kriechbeständigkeit im Vergleich zu einer Legierung, die keine Ausscheidungen vom Typ Fe₂(M,Si) oder vom Typ Fe₇(M,Si)₆ aufweist.

Als typisches Beispiel sei hier ein ferritischer Stahl mit 22 Massenprozent Chrom und 0,4 Massenprozent Mangan genannt. Bei 700 °C weist dieser unter einer Belastung von 10 MPa nach 1000 h eine bleibende Kriechdehnung von 1,5 % auf. Durch Zusatz der Elemente M, wie etwa Niob und/oder Wolfram, in einer Menge von nur 1 Massenprozent in Kombination mit einem Silizium-Zusatz von 0,3 Massenprozent reduziert sich die bleibende Kriechdehnung des Stahls bei gleichem Chrom- und Mangan-Gehalt auf 0,06 %, also etwa um einen Faktor 25.

Nach dem Stand der Technik war der maximal zulässige Gehalt an Ausscheidungen vom Typ vom Typ Fe₂M oder vom Typ Fe₇M₆ sehr begrenzt. Die mangelhafte Oxidationsbeständigkeit der Ausscheidungen vom Typ Fe₂M und Fe₇M₆ hatte zur Folge, dass sich beim Einsatz des Stahls in der Hochtemperaturbrennstoffzelle sehr schnell wachsende Oxidschichten bildeten. Dies war insbesondere bei Chromoxid bildenden Stählen von Nachteil, da lokal die Bildung der schützenden oxidischen Deckschichten auf Cr-Basis behindert oder die Wachstumsrate beschleunigt wurde. Dadurch wurde der Werkstoff insgesamt weniger korrosionsbeständig. Für den Gehalt an Fe₂M und/oder Fe₇M₆ in der Legierung musste also immer ein Kompromiss zwischen Erhöhung der Kriechbeständigkeit und Verringerung der Oxidationsbeständigkeit gefunden werden. Die erfindungsgemäße teilweise Substitution des Metalls M durch Silizium hebt die aus diesem Kompromiss folgende Einschränkung der maximal möglichen Kriechbeständigkeit auf.

Vorteilhaft enthält der Stahl das Metall M sowie Silizium in derartigen Konzentrationen, dass sich bei Temperaturen zwischen 700 °C und 900 °C eine intermetallische Phase vom Typ Fe₂(M,Si) oder Fe₇(M,Si)₆ zu bilden vermag. Dieser Temperaturbereich entspricht der angestrebten Betriebstemperatur moderner Hochtemperaturbrennstoffzellen und ist daher technologisch besonders relevant. Welche Menge an Metall M hierfür erforderlich ist, ergibt sich aus den bekannten Phasendiagrammen. Beispielsweise ist zur Bildung der Phase Fe₂Nb im Temperaturbereich zwischen 700 und 900 °C ein Niobgehalt von mindestens etwa 0,2 Massenprozent Niob in der Legierung erforderlich. Zur Bildung der Phase Fe₂W bei 800 °C ist ein Wolframgehalt von mindestens etwa 3 Massenprozent in der Legierung erforderlich. In einer vorteilhaften Ausgestaltung der Erfindung enthält der Stahl daher mindestens 3 Massenprozent Wolfram und vermag bei einer Temperatur von 800 °C Ausscheidungen einer intermetallischen Phase vom Typ Fe₂(W,Si) oder Fe₇(W,Si)₆. Liegen Metall M und Silizium in diesen vorteilhaften Konzentrationen vor, kann somit die intermetallische Phase beim ersten Betriebseinsatz des Stahls in einer Hochtemperaturbrennstoffzelle gebildet werden. Nach wie vor kann sie jedoch auch alternativ direkt bei der Herstellung des Stahls gebildet werden.

Die Legierung enthält zwischen 1 und 8 Volumenprozent, bevorzugt zwischen 2,5 und 5 Volumenprozent Ausscheidungen von Fe₂(M,Si) und/oder Fe₇(M,Si)₆. Bei Anteilen unterhalb dieses Bereichs ist die Steigerung der Kriechbeständigkeit technologisch nicht signifikant. Anteile oberhalb dieses Bereichs hingegen führen regelmäßig zu einer unerwünschten Versprödung der Legierung.

Die Summe an Ausscheidungen der Fe₂(M,Si)-Phase und/oder Fe₇(M,Si)₆ sollte zwischen 2 und 15 Atomprozent Silizium enthalten. Bei einem Siliziumgehalt unterhalb von 2 Atomprozent in der Fe₂(M,Si)- oder Fe₇(M,Si)₆-Phase ist die Oxidationsbeständigkeit der intermetallischen Phase mangelhaft. Bei einem Siliziumgehalt oberhalb von 15 Atomprozent ist die Löslichkeitsgrenze des Siliziums in der intermetallischen Phase überschritten, so dass graduell die bekannten Nachteile von Silizium als Legierungselement wieder auftreten, da das Silizium intern oxidiert. Ein Siliziumgehalt im zweckmäßigen Bereich zwischen 2 und 15 Atomprozent in der intermetallischen Phase wird beispielsweise bei Verwendung von Niob als einziges Metall M dadurch erreicht, dass das Massenverhältnis von Silizium zu Niob zwischen 0,08 und 1, bevorzugt aber zwischen 0,1 und 0,4 liegt. So bilden sich etwa in einem ferritischen Stahl mit 22 Massenprozent Chrom und einem Zusatz von Niob und Silizium von 0,6 oder 0,25 Massenprozent während des Einsatzes bei 800°C Ausscheidungen vom Typ Fe₂(Nb,Si) mit einem Silizium-Anteil von etwa 7 Atomprozent. Die Summe aller Ausscheidungen bildet im Stahl einen Anteil von etwa 1 Volumenprozent.

Flankierend zu den oben beschriebenen Maßnahmen zur Steigerung der Kriechfestigkeit kann mit den im Folgenden beschriebenen vorteilhaften Maßnahmen auch seine Eignung als Konstruktionswerkstoff für den Interkonnektor einer Hochtemperaturbrennstoffzelle optimiert werden, ohne dass dabei die erfindungsgemäß erzielte höhere Kriechfestigkeit leidet.

Vorteilhaft ist die Summe der Konzentrationen an Nickel und Kobalt in der Legierung größer als 0, jedoch kleiner als 4 Massenprozent, bevorzugt kleiner als 1 Massenprozent. Dadurch wird verhindert, dass die Legierung bei hohen Temperaturen, wie sie etwa in einer Hochtemperaturbrennstoffzelle herrschen, in ein austenitisches Gefüge übergeht.

Vorteilhaft sind die Konzentrationen von Kohlenstoff, Stickstoff, Schwefel, Bor und Phosphor in der Legierung jeweils großer als 0, jedoch kleiner als 0,1 Massenprozent, vorzugsweise kleiner als 0,02 Massenprozent. Diese Elemente gehören zu den üblicherweise in ferritischen Stählen vorhandenen Begleitelementen und Verunreinigungen. Generell bewirken höhere Zusätze dieser Legierungselemente eine Versprödung des Materials, insbesondere an den Legierungskorngrenzen.

Der Stahl enthält zwischen 12 und 28 Massenprozent, bevorzugt zwischen 17 und 25 Massenprozent, Chrom. Er ist ein Chromoxidbildner. Er bildet bei hohen Temperaturen, insbesondere in einer Hochtemperaturbrennstoffzelle, eine schützende oxidische Deckschicht auf Chrom-Basis. Durch die Deckschicht wird der Stahl insbesondere in den oxidierenden Atmosphären einer Brennstoffzelle vor Korrosion geschützt. Der für die Ausbildung der Deckschicht notwendige Chromgehalt richtet sich nach der Betriebstemperatur, bei der der Stahl eingesetzt wird, und kann durch den Fachmann in einer zumutbaren Anzahl Versuche ermittelt werden. Tendenziell erfordern höhere Betriebstemperaturen höhere Chromgehalte.

Die Deckschicht ist insbesondere in Hochtemperaturbrennstoffzellen vorteilhaft, da sie sich bei normalen Betriebstemperaturen zwischen 600 und 1000 °C spontan bildet. Dadurch heilt sie bei Defekten automatisch wieder aus. Dies ist insbesondere dann von Vorteil, wenn die Zelle häufigen Temperaturwechseln durch Anfahren und Herunterfahren ausgesetzt ist. Unter derartigen Bedingungen erhöht sich somit die Lebensdauer der Brennstoffzelle.

Über den Chromgehalt kann auch der thermische Ausdehnungskoeffizient des Stahls eingestellt werden. Dies ist insbesondere dann vorteilhaft, wenn aus dem Stahl eine Interkonnektorplatte (bipolare Platte) für einen Brennstoffzellenstapel gefertigt wird. In einem solchen Stapel sind nämlich eine Seite der Platte mit dem Kathodenwerkstoff einer Zelle und die andere Seite der Platte mit dem Anodenwerkstoff der anderen Zelle mechanisch fest verbunden. Unterscheidet sich der Ausdehnungskoeffizient der bipolaren Platte zu stark von dem des Kathoden- oder Anodenwerkstoffs, entstehen starke mechanische Spannungen. Diese können ein Aufreißen der Kathode, der Anode oder des zwischen Kathode und Anode einer Zelle befindlichen Festelektrolyten verursachen, was zum Versagen der Zelle führt. Typischerweise beträgt der thermische Ausdehnungskoeffizient eines ferritischen Stahls, der Chrom als einziges, wesentliches Legierungselement enthält, zwischen 800 °C und Raumtemperatur bei einem Chrom-Gehalt von 9 % etwa 16* 10⁻⁶ K⁻¹ und bei einem Chrom-Gehalt von 22 % etwa 13* 10⁻⁶ K⁻¹.

Die Legierung enthält mindestens ein sauerstoffaffines Element aus der Gruppe Yttrium, Lanthan, Zirkonium, Cer oder Hafnium. Die Gesamtkonzentration an sauerstoffaffinen Elementen in der Legierung liegt zwischen 0,01 und 1 Massenprozent, bevorzugt zwischen 0,05 und 0,3 Massenprozent. Der Zusatz eines sauerstoffaffinen Elements oder auch einer Kombination mehrerer sauerstoffaffiner Elemente bewirkt eine Reduzierung der Wachstumsrate und eine Verbesserung der Haftung der oxidischen Deckschicht auf Chrombasis. Dies ist vorteilhaft, da hohe Wachstumsraten zu einer schnellen Reduzierung der Wandstärke dünner Komponenten führen. Außerdem wird durch hohe Wachstumsraten die kritische Dicke die zum Abplatzen der Oxidschichten führt, bereits nach kurzen Zeiten erreicht, was die Gasströmung in den engen Gaskanälen einer Hochtemperaturbrennstoffzelle unakzeptabel hemmt.

Die Legierung kann das sauerstoffaffine Element auch in Form einer Oxiddispersion, wie etwa Y₂O₃, La₂O₃ oder ZrO₂, enthalten. Die Konzentration der jeweiligen Oxiddispersion in der Legierung sollte dann zwischen 0,1 und 2 Massenprozent, bevorzugt zwischen 0,4 und 1 Massenprozent, betragen. Der Vorteil der Oxiddispersion gegenüber dem Einbringen in metallischer Form ist, dass hierdurch die Hochtemperaturfestigkeit erhöht wird. Stähle die Oxiddispersionen enthalten, können beispielsweise auf pulvermetallurgischem Wege hergestellt werden.

Vorteilhaft enthält die Legierung ein Element E, das bei Temperaturen oberhalb 500 °C mit Cr₂O₃ eine Spinellphase vom Typ ECr₂O₄ an der Oberfläche des Stahls bildet. E ist Mangan oder Kupfer, wobei sich Mangan als besonders geeignet erwiesen hat. Die Konzentration des Elements E in der Legierung beträgt zwischen 0,05 bis 2 Massenprozent, bevorzugt 0,2 bis 1 Massenprozent. Durch die Spinellbildung dampft das Werkstück weniger flüchtige Chromverbindungen ab als es der Fall wäre bei einem Werkstück, das eine reine Chrom-Oxiddeckschicht bildet. Derartige flüchtige Chrom-Verbindungen sind insbesondere im Inneren einer Hochtemperaturbrennstoffzelle unerwünscht, da sie als Katalysatorgifte die Zellenleistung dauerhaft vermindern. Durch die Spinell bildung auf der Chromoxidschicht wird beispielsweise die Abdampfung von flüchtigen ChromVerbindungen bei 800°C in feuchter Luft um einen Faktor 5-20 reduziert.

In einer weiteren vorteilhaften Ausgestaltung der Erfindung enthält die Legierung weniger als 0,5 Massenprozent, bevorzugt weniger als 0,15 Massenprozent, Aluminium. Dadurch wird verhindert, dass sich im Stahl in der Zone unterhalb der Oxiddeckschicht auf Chrom-Basis bei hohen Temperaturen Einschlüsse von Aluminiumoxiden, insbesondere an den Legierungskorngrenzen, bilden. Diese Einschlüsse sind zu vermeiden, da sie nachteilig die mechanischen Eigenschaften des Stahls beeinträchtigen und zudem durch Volumenzunahme eine Bildung von Metalleinschlüssen in der Chrom-Oxidschicht bewirken. Diese Metalleinschlüsse beeinträchtigen wiederum die schützenden Eigenschaften der Chrom-Oxidschicht.

Daneben wird durch den geringen Aluminiumgehalt insbesondere die Bildung aluminiumreicher, elektrisch isolierender Oxidschichten an der Oberfläche des Stahls verhindert. Derartige Oxidschichten wirken sich besonders nachteilig aus, wenn aus dem Stahl die bipolare Platte für einen Brennstoffzellenstapel gefertigt wird. Der vom Brennstoffzellenstapel erzeugte Strom muss sämtliche bipolaren Platten im Stapel durchqueren. Isolierende Schichten auf diesen Platten erhöhen daher den Innenwiderstand des Stapels und senken die Leistungsausbeute erheblich.

Vorteilhaft enthält die Legierung einen geringen Zusatz an Titan von weniger als 0,2 Massenprozent, bevorzugt weniger als 0,1 Massenprozent. Bei derartig niedrigen Konzentrationen bilden sich bei hohen Temperaturen extrem fein verteilte Partikel aus Titan-Oxid unterhalb der Chromoxid-Deckschicht. Dies bewirkt eine Verfestigung des Materials innerhalb dieser Zone, wodurch eine Aufwölbung der Oberfläche durch oxidationsinduzierte Spannungen unterdrückt wird. Bei höheren Titankonzentrationen treten ähnlich nachteilige Effekte auf wie bei zu hohen Aluminiumgehalten.

Im Rahmen der Erfindung wurde erkannt, dass eine bipolare Platte aus dem erfindungsgemäßen Stahl besondere Vorteile für die Verwendung in einem Brennstoffzellenstapel und insbesondere für die Verwendung in einer bipolaren Platte für einen Brennstoffzellenstapel aufweist. Der erfindungsgemäße Stahl lässt sich so maßschneidern, dass die Platte bei typischen Betriebstemperaturen von Hochtemperaturbrennstoffzellen oxidationsbeständig ist, eine gute elektrische Leitfähigkeit (einschließlich der sich auf den Oberflächen bildenden Oxidschichten) aufweist und eine geringe Abdampfrate von flüchtigen Chromverbindungen (Chromoxid beziehungsweise Chrom-oxy-hydroxid) aufweist. Außerdem weist der Stahl einen niedrigen thermischen Ausdehnungskoeffizienten (ähnlich den der keramischen Komponenten in einer Hochtemperaturbrennstoffzelle) auf. Er lässt sich durch herkömmliche Verfahren warm- und kaltverformen sowie mechanisch bearbeiten. Es wurde erkannt, dass sich auf Grund dieser vorteilhaften Eigenschaften die Leistungsausbeute und Lebensdauer eines Brennstoffzellenstapels erheblich steigern lässt, indem er mit bipolaren Platten aus dem erfindungsgemäßen Stahl ausgerüstet wird.

Der hier beschriebene Stahl kann auch auf anderen Gebieten der Technik eingesetzt werden, bei denen eine hohe Oxidations/Korrosionsbeständigkeit und hohe Kriechbeständigkeit in Kombination mit hoher elektrischer Leitfähigkeit der im Betrieb gebildeten Chromoxidschicht, eventuell unter der zusätzlichen Maßgabe einer geringen Chromverdampfung, gefordert wird. Beispielsweise kann er für Elektroden oder für Elektrodenhalter in flüssigen Metallen und Schmelzen eingesetzt werden. Außerdem ist er durch seine spezielle Kombination von Eigenschaften als Konstruktionswerkstoff für Elektrofilter in Rauchgasen sowie als Heizleiterwerkstoff oder Stromabnehmer für keramische Heizleiter z. B. auf Basis Molybdän-Silizid oder Silizium-Carbid einsetzbar. Auch ist das Material in Sauerstoffdetektoren wie z. B. Lambda-Sonden anwendbar. Ein weiteres Anwendungsgebiet sind dampfführende Leitungen in Kraftwerken. Hier kann der neue Werkstoff die heute eingesetzten ferritischen 9-12%Cr-Stähle ersetzen, insbesondere falls im Interesse eines erhöhten Wirkungsgrades die Betriebstemperaturen von den heute üblichen 500 bis 550 °C auf 600 bis 700°C erhöht werden.

### Spezieller Beschreibungsteil

Nachfolgend wird der Gegenstand der Erfindung anhand von Ausführungsbeispielen und Figuren näher erläutert, ohne dass der Gegenstand der Erfindung dadurch beschränkt wird. Es ist gezeigt:
- Figur 1:: Oxidschicht 13 auf einer Legierung 11 aus Eisen, Chrom, Mangan und Lanthan.
- Figur 2:: Oxidschicht 13 auf einer Legierung 21 aus Eisen, Chrom, Mangan und Lanthan mit Zusatz von Titan.
- Figur 3:: Oxidschicht 13 auf einer Legierung 31 aus Eisen, Chrom, Mangan und Lanthan mit Zusatz von Titan und Substitution durch Silizium.
- Figur 4:: Oxidschicht 13 auf einer Legierung 41 aus Eisen, Chrom, Mangan, Lan- than, Niob und Wolfram, mit einer zwischen Oxidschicht 13 und Legie- rung 41 angeordneten Niob-reichen Oxidschicht 47.
- Figur 5:: Oxidschicht 13 auf einer Legierung 51 aus Eisen, Chrom, Mangan, Lan- than, Niob und Wolfram mit Substitution durch Silizium.
- Figur 6:: Ausscheidungen (56) vom Typ Fe₂(M,Si) an Legierungskorngrenzen so- wie Ausscheidungen (55) vom Typ Fe₂(M,Si) im Legierungskorn.

Die nachfolgend aufgeführten Zusammensetzungen für eine Interkonnektorlegierung (bipolare Platte) haben sich als besonders vorteilhaft bezüglich ihres Ausdehnungskoeffizienten, ihrer Kriechbeständigkeit, ihrer Oxidationsbeständigkeit sowie der elektrischen Leitfähigkeit der oxidischen Deckschicht herausgestellt. Die Prozentanteile beziehen sich jeweils auf Massenprozent.
1. Eisen-Basis, 21-23% Chrom, 0,2-0,6 % Mangan, 0,05-0,15 % Lanthan, 0,4-1 % Niob, 0,3-0,6 % Silizium, weniger als 0,1 % Aluminium, 0,001-0,02 % Kohlenstoff.
2. Eisen-Basis, 21-23 % Chrom, 0,2-0,6 % Mangan, 0,05-0,15 % Lanthan, 0,4-1 % Niob, 0,3-0,6 % Silizium, 0,04-0,1 % Titan, weniger als 0,1 % Aluminium, 0,001-0,04 % Kohlenstoff.
3. Eisen-Basis, 21-23% Chrom, 0,2-0,6 % Mangan, 0,05-0,15 % Lanthan,0,2-0,6 % Niob, 1,5-3,5 % Wolfram, 0,3-0,6 % Silizium, weniger als 0,05 % Aluminium.
4. Eisen-Basis, 21-23 % Chrom, 0,2-0,6 % Mangan, 0,05-0,15 % Lanthan, 0,2-0,6 % Niob, 1,5-3,5 % Wolfram, 0,3-0,6 % Silizium, 0,04-0,1 % Titan, weniger als 0,08 % Aluminium, 0,001-0,01 % Kohlenstoff.
5. Eisen-Basis, 21-23 % Chrom, 0,2-0,6 % Mangan, 0,05-0,15 % Lanthan, 3,0-5,0 % Wolfram, 0,1-0,6 % Silizium, 0,02-0,1 % Titan, weniger als 0,08 % Aluminium, 0,001-0,01 % Kohlenstoff.
6. Eisen-Basis, 21-23% Chrom, 0,2-0,6 % Mangan, 0,05-0,15 % Lanthan, 5,0-7,0 % Wolfram, 0,2-0,8 % Silizium, 0,02-0,1 % Titan, weniger als 0,08 % Aluminium, 0,001-0,01 % Kohlenstoff

Die mikrostrukturellen Gegebenheiten der neuen Legierung sowie die Beeinflussung der Oxidwachstumsraten seien hier nochmals an Hand der unter Punkt 4 genannten Legierung erläutert:

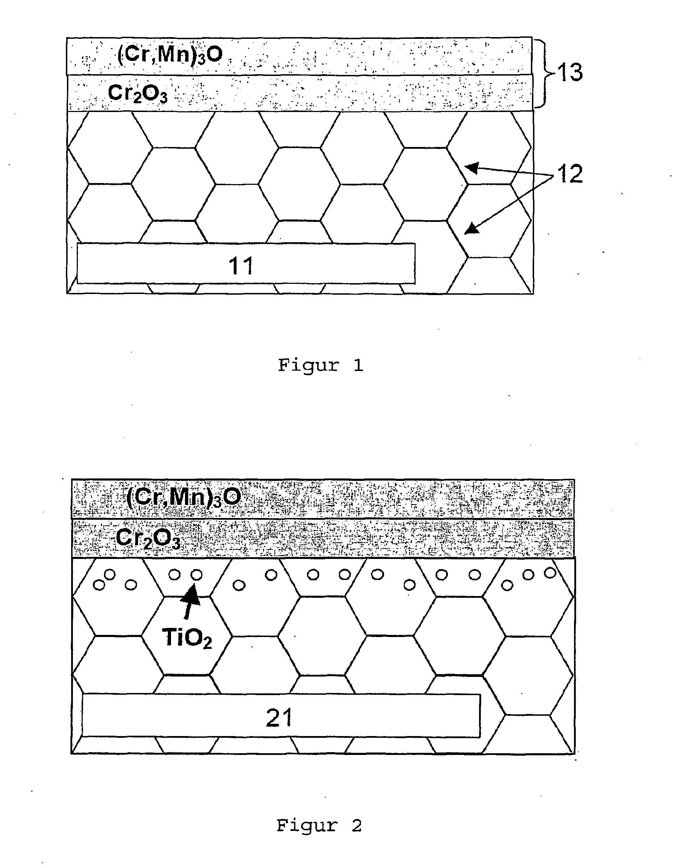

Figur 1 zeigt eine Oxidschicht 13 auf einer Eisen-Basis-Legierung 11 mit 21-23 % Chrom, 0,2-0,6 % Mangan und 0,05-0,15 % Lanthan mit Legierungskorngrenzen 12. Die Oxidschicht 13 aus Cr₂O₃ und Cr₂MnO₄ bildet sich bei 800°C in Luft.
Figur 2 zeigt die Oxidschicht 13 auf einer Legierung 21, der gegenüber der Legierung 11 aus Figur 1 0,02-0,1 % Titan zugesetzt wurden. Dadurch bilden sich unterhalb der Cr₂O₃-Schicht feine innere Oxidationsteilchen von Ti-Oxid.

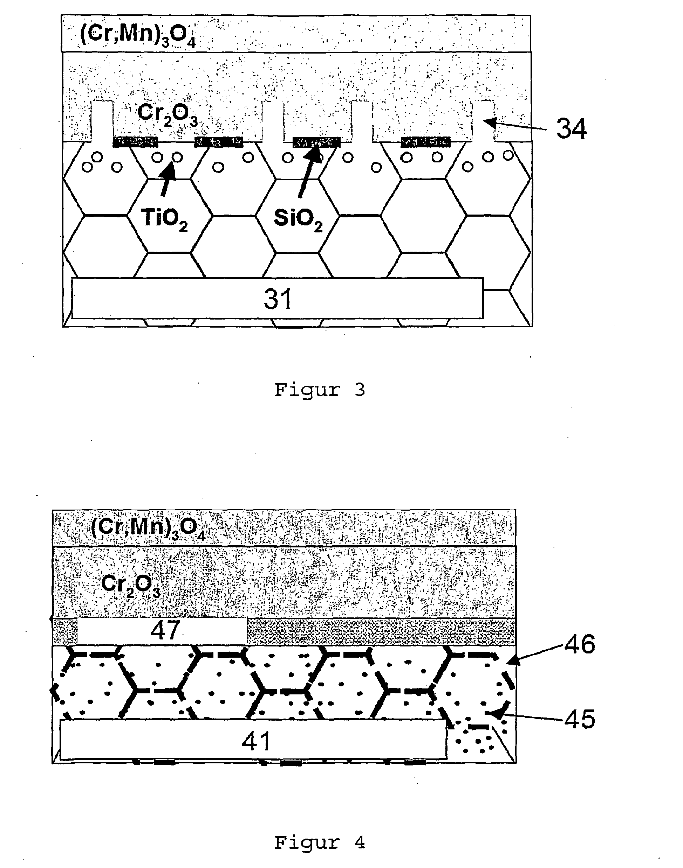

Figur 3 zeigt die Oxidschicht 13 auf einer Legierung 31, die gegenüber der Legierung 21 aus Figur 2 zusätzlich 0,3-0,6 % Silizium enthält. Durch den Silizium-Zusatz bilden sich an und in der Nähe der Grenzfläche zwischen Legierung und Oxid Ausscheidungen von SiO₂. Diese bewirken unerwünscht die Bildung metallischer Einschlüsse 34 und eine Erhöhung der Oxidationsrate. Die Oxidschicht ist damit deutlich dicker als in den Figuren 1 und 2. Die Bildung metallischer Einschlüsse und die Erhöhung der Oxidationsrate tritt ebenfalls auf, wenn 0,3-0,6 % Silizium einer titanfreien Legierung (vergleiche Figur 1) zugesetzt wird.
Figur 4 zeigt die Oxidschicht 13 auf einer Legierung 41, der gegenüber der Legierung 11 aus Figur 1 0,2-0,6 % Niob und 1,5-3,5 % Wolfram zugesetzt wurden. Zwischen der Oxidschicht 13 und der Legierung 41 befindet sich eine Niob-reiche Oxidschicht 47. Durch die Zusätze von Niob und Wolfram bilden sich im Legierungskom Ausscheidungen 45 vom Typ Fe₂M. Auf den Legierungskorngrenzen bilden sich Ausscheidungen 46 vom Typ Fe₂M, wodurch die Legierung eine höhere Kriechbeständigkeit erhält. Nachteilig ist jedoch, dass die Oxidationsrate stark erhöht wird. Nach gleicher Auslagerungszeit ist die Oxidschicht auf der Legierung 41 deutlich dicker als auf der Legierung 11. Zusätzliche Dotierung mit 0,02-0,1 % Titan würde feine innere Oxidationsteilchen bewirken wie dargestellt in den Figuren 2 und 3.

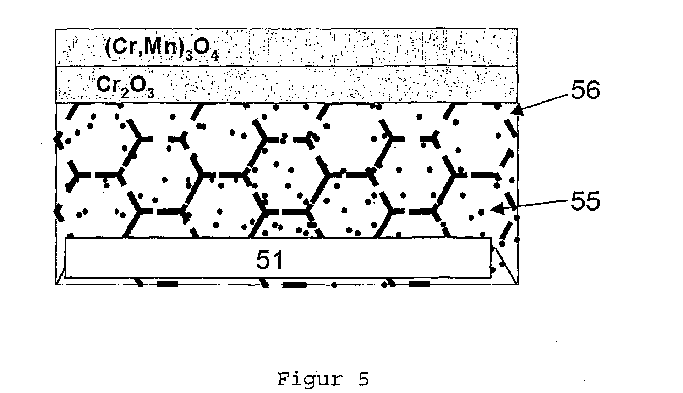

Figur 5 zeigt die erfindungsgemäße Ausgestaltung mit der Oxidschicht 13 auf einer Legierung 51, der gegenüber der Legierung 11 aus Figur 1 0,2-0,6 % Niob, 1,5-3,5 % Wolfram und 0,3-0,6 % Silizium zugesetzt wurden. Dadurch bilden sich im Legierungskorn Ausscheidungen 55 vom Typ Fe₂(M,Si). Auf den Legierungskorngrenzen bilden sich Ausscheidungen 56 vom Typ Fe₂(M,Si). Durch die Ausscheidungen 55 und 56 erhält die Legierung eine höhere Kriechbeständigkeit. Anders als bei der Legierung 41 aus Figur 4 wird die Oxidationsrate durch die Zusätze der Elemente Nb und W im Vergleich zu Legierung 11 aus Figur 1 nicht erhöht. Nach gleicher Auslagerungszeit weist die Oxidschicht auf der Legierung 51 aus Figur 5 eine ähnliche Dicke wie die auf der Legierung 11 aus Figur 1 auf. Zusätzliche Dotierung mit 0,02-0,1 % Titan würde feine innere Oxidationsteilchen bewirken, wie sie in den Figuren 2 und 3 dargestellt sind.

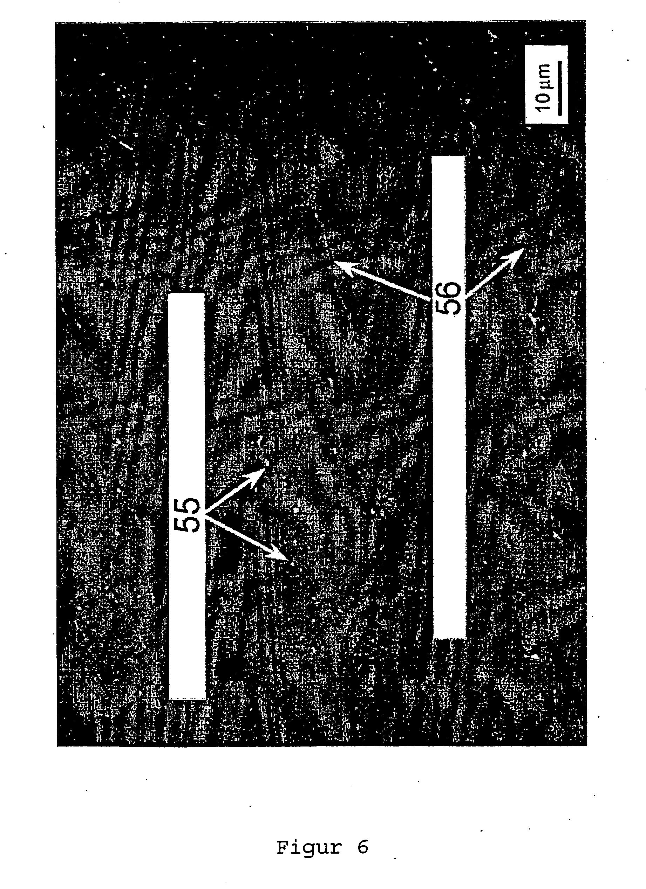

Figur 6 zeigt eine rasterelektronenmikroskopische Aufnahme der Ausscheidungen 55 und 56 aus Figur 5.

## Patentansprüche

1. Ferritischer Chromstahl, der an seiner Oberfläche bei Temperaturen zwischen 600 und 1000 °C eine Oxidschicht auf Cr₂O₃-Basis bildet, die das Innere des Stahls vor Korrosion schützt, wobei dieser Stahl zwischen 12 und 28 Massenprozent Chrom, insbesondere zwischen 17 und 25 Massenprozent Chrom, sowie wenigstens ein sauerstoffaffines Element aus der Gruppe Yttrium, Lanthan, Zirkonium, Cer oder Hafnium enthält, wobei die Gesamtkonzentration dieser sauerstoffaffinen Elemente zwischen 0,01 und 1 Massenprozent beträgt,
**dadurch gekennzeichnet, dass** der ferritische Stahl bei Temperaturen zwischen 600 °C und 1000 °C Ausscheidungen einer intermetallischen Phase vom Typ Fe₂(M,Si) oder Fe₇(M,Si)₆ auszubilden vermag und wobei der Anteil dieser Ausscheidungen von Fe₂(M,Si) und/oder Fe₇(M,Si)₆ zwischen 1 und 8 Volumenprozent beträgt, wobei M entweder Wolfram oder eine Kombination aus Wolfram und weiteren Legierungselementen des ferritischen Stahls ist.

2. Stahl nach Anspruch 1, **dadurch gekennzeichnet, dass** er mindestens 3 Massenprozent Wolfram enthält und bei einer Temperatur von 800 °C Ausscheidungen einer intermetallischen Phase vom Typ Fe₂(W,Si) oder Fe₇(W,Si)₆ auszubilden vermag.

3. Stahl nach einem der Ansprüche 1 bis 2, **dadurch gekennzeichnet, dass** M neben Wolfram mindestens ein weiteres Legierungselement aus der Gruppe Niob, Molybdän oder Tantal umfasst.

4. Stahl nach einem der Ansprüche 1 bis 3, **gekennzeichnet durch** eine Legierung mit einem Anteil der Ausscheidungen von Fe₂(M,Si) und/oder Fe₇(M,Si)₆ zwischen 2,5 und 5 Volumenprozent.

5. Stahl nach einem der Ansprüche 1 bis 4, **dadurch gekennzeichnet, dass** die Summe an Ausscheidungen der Fe₂(M,Si)-Phase und/oder Fe₇(M,Si)₆ zwischen 2 und 15 Atomprozent Silizium enthält.

6. Stahl nach einem der Ansprüche 1 bis 5, **gekennzeichnet durch** eine Legierung, in der die Summe der Konzentrationen an Nickel und Kobalt größer als 0, jedoch kleiner als 4 Massenprozent ist.

7. Stahl nach einem der Ansprüche 1 bis 6, **gekennzeichnet durch** eine Legierung, in der die Konzentrationen von Kohlenstoff, Stickstoff, Schwefel, Bor und Phosphor größer als 0, jedoch kleiner als 0,1 Massenprozent, vorzugsweise kleiner als 0,02 Massenprozent sind.

8. Stahl nach einem der Ansprüche 1 bis 7, **gekennzeichnet durch** eine Legierung mit einer Gesamtkonzentration an sauerstoffaffinen Elementen zwischen 0,05 und 0,3 Massenprozent.

9. Stahl nach einem der Ansprüche 1 bis 8, **gekennzeichnet durch** eine Legierung, die das sauerstoffaffine Element in Form einer Oxiddispersion enthält.

10. Stahl nach Anspruch 9, **gekennzeichnet durch** eine Konzentration der Oxiddispersion in der Legierung zwischen 0,1 und 2 Massenprozent, insbesondere zwischen 0,4 und 1 Massenprozent.

11. Stahl nach einem der Ansprüche 1 bis 10, **gekennzeichnet durch** eine Legierung, die zwischen 0,05 und 2 Massenprozent, insbesondere zwischen 0,2 und 1 Massenprozent, eines Elements E enthält, das bei Temperaturen oberhalb 500 °C mit Cr₂O₃ eine Spinellphase vom Typ ECr₂O₄ an der Oberfläche des Stahls bildet, wobei E entweder Mangan oder Kupfer ist.

12. Stahl nach einem der Ansprüche 1 bis 11, **gekennzeichnet durch** eine Legierung, die weniger als 1 Massenprozent, insbesondere weniger als 0,15 Massenprozent an Aluminium enthält.

13. Stahl nach einem der Ansprüche 1 bis 12, **gekennzeichnet durch** eine Legierung, die einen Zusatz an Titan von weniger als 0,2 Massenprozent, insbesondere weniger als 0,1 Massenprozent, enthält.

14. Verwendung eines Stahls nach einem der Ansprüche 1 bis 13 in einem Brennstoffzellenstapel.

15. Verwendung eines Stahls nach einem der Ansprüche 1 bis 13 in einer bipolaren Platte für einen Brennstoffzellenstapel.

## Claims

1. Ferritic chromium steel which, at temperatures between 600°C and 1000°C, forms on its surface a Cr₂O₃-based oxide layer which protects the interior of the steel against corrosion, this steel containing between 12% and 28% by mass of chromium, and in particular between 17% and 25% by mass of chromium, and at least one element having an affinity for oxygen from the group comprising yttrium, lanthanum, zirconium, cerium and hafnium, the total concentration of these elements having an affinity for oxygen being between 0.01% and 1% by mass, **characterised in that** the ferritic steel is able to form precipitates of an intermetallic phase of the Fe₂(M,Si) or Fe₇(M,Si)₆ type at temperatures between 600°C and 1000°C and the proportion of these precipitates of Fe₂(M,Si) and/or Fe₇(M,Si)₆ being between 1% and 8% by volume, M being either tungsten or a combination of tungsten and other alloying elements of the ferritic steel.

2. Steel according to claim 1, **characterised in that** it contains at least 3% by mass of tungsten and is able to form precipitates of an intermetallic phase of the Fe₂(W,Si) or Fe₇(W,Si)₆ type at a temperature of 800°C.

3. Steel according to either of claims 1 and 2, **characterised in that**, as well as tungsten, M also comprises at least one other alloying element from the group comprising niobium, molybdenum and tantalum.

4. Steel according to one of claims 1 to 3, **characterised by** an alloy having a proportion of precipitates of Fe₂(M,Si) and/or Fe₇(M,Si)₆ of between 2.5% and 5% by volume.

5. Steel according to one of claims 1 to 4, **characterised in that** the total precipitates of the Fe₂(M,Si) phase and/or Fe₇(M,Si)₆ include between 2 and 15 atomic percent of silicon.

6. Steel according to one of claims 1 to 5, **characterised by** an alloy in which the total of the concentrations of nickel and cobalt is more than 0% but less than 4% by mass.

7. Steel according to one of claims 1 to 6, **characterised by** an alloy in which the concentrations of carbon, nitrogen, sulphur, boron and phosphorus are more than 0% but less than 0.1% by mass, and preferably less than 0.02% by mass.

8. Steel according to one of claims 1 to 7, **characterised by** an alloy having a total concentration of elements having an affinity for oxygen of between 0.05% and 0.3% by mass.

9. Steel according to one of claims 1 to 8, **characterised by** an alloy which contains the element having an affinity for oxygen in the form of an oxide dispersion.

10. Steel according to claim 9, **characterised by** a concentration of the oxide dispersion in the alloy of between 0.1% and 2% by mass, and in particular of between 0.4% and 1% by mass.

11. Steel according to one of claims 1 to 10, **characterised by** an alloy which contains between 0.05% and 2% by mass, and in particular between 0.2% and 1% by mass, of an element E which, with Cr₂O₃, forms a spinel phase of the ECr₂O₄ type on the surface of the steel at temperatures above 500°C, E being either manganese or copper.

12. Steel according to one of claims 1 to 11, **characterised by** an alloy which contains less than 1% by mass, and in particular less than 0.15% by mass, of aluminium.

13. Steel according to one of claims 1 to 12, **characterised by** an alloy which contains an addition of titanium of less than 0.2% by mass, and in particular of less than 0.1% by mass.

14. Use of a steel according to one of claims 1 to 13 in a fuel cell stack.

15. Use of a steel according to one of claims 1 to 13 in a bipolar plate for a fuel cell stack.

## Revendications

1. Acier ferritique au chrome qui forme, sur sa surface, à des températures entre 600 et 1000° C, une couche d'oxyde à base de Cr₂-O₃ qui protège l'intérieur de l'acier contre la corrosion, cet acier comportant entre 12 et 28 % en poids de chrome, en particulier entre 17 et 25 % en poids de chrome et au moins un élément présentant une affinité pour l'oxygène, choisi dans le groupe comprenant l'yttrium, le lanthane, le zirconium, le cérium ou le hafnium, la concentration totale de ces éléments ayant une affinité pour l'oxygène se situant entre 0,01 et 1 % en poids,
**caractérisé en ce que** l'acier ferritique peut former à des températures entre 600° C et 1000° C, des précipitations d'une phase inter-métallique de type Fe₂(M, Si) ou Fe₇(M, Si)₆ et dans lequel la proportion de ces précipitations de Fe₂(M, Si) et/ou de Fe₇(M, Si)₆ se situe entre 1 et 8 % en volume, M étant soit le wolfram soit une combinaison de wolfram et d'autres éléments d'alliage d'acier ferritique.

2. Acier selon la revendication 1, **caractérisé en ce qu'**il contient au moins 3 % en poids de wolfram et peut former, à des températures de 800° C, des précipitations d'une phase intermétallique de type Fe₂(W, Si) ou Fe₇(W, Si)₆.

3. Acier selon l'une des revendications 1 à 2, **caractérisé en ce que** M comprend, outre le wolfram, au moins un autre élément d'alliage du groupe comprenant le niobium, le molybdène ou le tantale.

4. Acier selon l'une des revendications 1 à 3, **caractérisé par** un alliage comportant une proportion de précipitations de Fe₂(M, Si) et/ou de Fe₇(M, Si)₆ entre 2,5 et 5 % en volume.

5. Acier selon l'une des revendications 1 à 4, **caractérisé en ce que** la somme des précipitations de la phase Fe₂(M, Si) et/ou de Fe₇(M, Si)₆ contient entre 2 et 15 % en mole de silicium.

6. Acier selon l'une des revendications 1 à 5, **caractérisé par** un alliage dans lequel la somme des concentrations de nickel et de cobalt est supérieure à 0, mais inférieure à 4 % en poids.

7. Acier selon l'une des revendications 1 à 6, **caractérisé par** un alliage dans lequel les concentrations de carbone, d'azote, de soufre, de bore et de phosphore sont supérieures à 0 mais inférieures à 0,1 % en poids, de préférence inférieures à 0,02 % en poids.

8. Acier selon l'une des revendications 1 à 7, **caractérisé par** un alliage présentant une concentration totale d'éléments ayant une affinité pour l'oxygène entre 0,05 et 0,3 % en poids.

9. Acier selon l'une des revendications 1 à 8, **caractérisé par** un alliage qui contient l'élément ayant une affinité pour l'oxygène sous la forme d'une dispersion d'oxyde.

10. Acier selon la revendication 9, **caractérisé par** une concentration de dispersion d'oxyde dans l'alliage entre 0,1 et 2 % en poids, en particulier entre 0,4 et 1 % en poids.

11. Acier selon l'une des revendications 1 à 10, **caractérisé par** un alliage qui contient entre 0,05 et 2 % en poids, en particulier entre 0,2 et 1 % en poids, d'un élément E qui forme, à des températures supérieures à 500° C avec le Cr₂O₃, une phase de spinelle de type ECr₂O₄ sur la surface de l'acier, E étant le manganèse ou le cuivre.

12. Acier selon l'une des revendications 1 à 11, **caractérisé par** un alliage qui contient moins de 1 % en poids, en particulier moins de 0,15 % en poids d'aluminium.

13. Acier selon l'une des revendications 1 à 12, **caractérisé par** un alliage qui contient un supplément de titane de moins de 0,2 % en poids, en particulier de moins de 0,1 % en poids.

14. Utilisation d'un acier selon l'une des revendications 1 à 13, dans une pile à combustible.

15. Utilisation d'un acier selon l'une des revendications 1 à 13, dans une plaque bipolaire pour une pile à combustible.
